**Europäisches Patentamt**

**European Patent Office**

**Office européen des brevets**

(19)

(11) Veröffentlichungsnummer: **0 263 388 B1**

## EUROPÄISCHE PATENTSCHRIFT

(12)

(45) Veröffentlichungstag der Patentschrift: **06.03.91**

(51) Int. Cl.⁵: **B60G 5/04, B60G 11/40**

(21) Anmeldenummer: **87114110.7**

(22) Anmeldetag: **26.09.87**

(54) Verwendung eines Gummilagers und dessen Ausgestaltung.

(30) Priorität: **09.10.86 DE 3634426**

(43) Veröffentlichungstag der Anmeldung:
**13.04.88 Patentblatt 88/15**

(45) Bekanntmachung des Hinweises auf die
Patenterteilung:
**06.03.91 Patentblatt 91/10**

(84) Benannte Vertragsstaaten:
**AT BE CH DE FR GB IT LI NL SE**

(56) Entgegenhaltungen:
**DE-B- 1 113 961**
**DE-C- 718 344**
**DE-C- 913 387**
**DE-U- 1 892 259**
**US-A- 2 950 102**

(73) Patentinhaber: **MAN Nutzfahrzeuge Aktiengesellschaft**
**Dachauer Strasse 667 Postfach 50 06 20**
**W-8000 München 50(DE)**

Patentinhaber: **Mündener Gummiwerk GmbH**
**Postfach 14 20**
**W-3510 Hannoversch Münden 1(DE)**

(72) Erfinder: **Stummer, Josef**
**Glockenbecherstrasse 16a**
**W-8000 München 45(DE)**
Erfinder: **Hirschmann, Rudolf**
**Fastlinger Ring 7**
**W-8044 Unterschleissheim(DE)**
Erfinder: **Reichardt, Peter**
**Waliser Strasse 6/2**
**W-7140 Ludwigsburg(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf die Verwendung eines Gummilagers mit je einer Montageplatte am oberen und unteren Ende eines Gummikörpers und mindestens einem zwischen den Montageplatten, im wesentlichen parallel zu diesen angeordneten, in den Gummikörper einvulkanisierten, in zwei Ebenen räumlich gekrümmten Stabilisierungsblech, bei einem Doppelachsaggregat eines Straßennutzfahrzeuges.

Bei bekannten Doppelachsaggregaten in Straßennutzfahrzeugen ruhen die Enden der Blattfedern gleitend auf einem Federsattel. Über den Federsattel werden die Lasten vom Aufbau gleichmäßig auf die Achsen übertragen. Außerdem übernimmt die Feder die Achsführung quer zur Fahrzeugmitte. Beim Einfedern der Achsen entsteht zwischen Feder und Federsattel eine Relativbewegung. Durch das Gleiten der Feder auf dem Federsattel entstehen Reaktionskräfte, die das System belasten. Das führt zu Verschleiß, Geräuschen und verschlechtert den Fahrkomfort.

Die vorgenannten Probleme können bekannterweise mittels eines zwischen Feder und Achse angeordneten Gummilagers verbessert werden; dabei ergibt sich eine relativ hohe Bauweise des Gummilagers, um einen Ausgleich zwischen Feder und Achse zu gewährleisten. Dies führt dazu, daß die Gummilager nur geringe Führungs- und Achskräfte übertragen können. Solcherart neigen die eingesetzten Gummielemente mit zunehmender Höhe zu Instabilität, wobei eine funktionsfähige Achsführung nicht mehr gewährleistet ist.

Es sind auch Gummilager in lamellierter Ausführung bekannt. Diese sind als Gummimetallteile aufgebaut und bestehen aus einer Anzahl paralleler Gummischichten, die durch einvulkanisierte Blechteile unterteilt sind. Die Größe der Relativbewegungen an der Verbindungsstelle bestimmt die notwendige Bauhöhe, die gleichzeitig ein Maß für Rückstellkräfte und damit für die erreichbare Komfortverbesserung ist. Durch Geometriefehler werden die Druckkräfte zwischen den Federenden und dem Federsattel asymmetrisch in das Gummilager eingeleitet. Dies führt mit zunehmender Bauhöhe zu Knickinstabilitäten, die eine frühzeitige Zerstörung des Gummilagers erzwingen. Es sind Lösungen bekannt, bei denen das Ausknicken des Gummilagers durch innere Führungselemente vermieden werden soll. Dies hat sich jedoch in der Praxis nicht bewährt.

Es ist ein Gummilager mit Stabilisierungsblechen gemäß der DE-AS 11 13 961 bekannt. Die Stabilisierungsbleche und die zwischen diesen liegenden Gummischichten sind hier reifenförmig gestaltet, d.h., nur in einer Ebene gekrümmt. Außerdem ist die Anwendung dieses Gummilagers für Schienenfahrzeuge gedacht.

Der Stand der Technik zeigt weiterhin im Conti-Katalog "Schwingmetall vom Oktober 1986, Seite 130" ein Gummilager mit einer räumlichen Krümmung in zwei Ebenen (Kegelform).

Der Erfindung liegt die Aufgabe zugrunde, eine stabile Verbindung und Kraftübertragung zwischen Federn und Achse bzw. Federsattel von Straßennutzfahrzeugen zu schaffen, wodurch Verschleißminderung, Geräuschdämpfung und Komfortverbesserung erzielt werden.

Dies wird erfindungsgemäß durch die Merkmale des Anspruchs 1 erzielt. Bei der Anwendung eines gattungsgemäßen Gummilagers bei Doppelachsaggregaten von Straßennutzfahrzeugen werden vielfache, nutzfahrzeugspezifische Vorteile erzielt. So werden durch die räumliche Krümmung der Stabilisierungsbleche in zwei Ebenen, insbesondere auch durch die kugelsegmentartige Ausgestaltung, die Relativbewegungen zwischen Achse und Federpaket von Druck- und Zugbewegungen in Gleitbewegungen umgewandelt. Weiterhin wird die Spannungsverteilung zwischen den Gummischichten wesentlich verbessert, und es werden die Lenkkräfte zwischen Achse und Rahmen reduziert, und die Achsführungselemente können somit leichter dimensioniert werden. Die Knickstabilität mit nicht zentrischer bzw. schräger Druckbelastung wird erhöht, und es werden Rückstellmomente bei Verdrehung zwischen Achskörper und Blattfeder verkleinert, Beanspruchungen werden abgebaut und eine zusätzliche Komfortverbesserung erreicht.

Bei neueren Lkw-Entwicklungen wird die Aufhängung der Doppelachsaggregate so gestaltet, daß bei unbelastetem Wagen eine der Doppelachsen zwecks Reifen- und Lagerschonung von der Straßendecke abgehoben werden kann. Insbesondere hier ist die Anwendung des Gummilagers gemäß der Patentanmeldung von großer Bedeutung, werden doch so schädliche Zugbelastungen im Gummikörper weitgehendst vermieden, an deren Stelle Schubkräfte treten, auf die der Gummikörper optimal belastbar ist.

Die gesamte Relativbewegung wird molekular in dem Gummilager aufgenommen und durch die Gummi-Eigenschwingung gedämpft. Durch den erfindungsgemäßen Aufbau des Gummilagers wird eine weichere, flachere Federkennung erreicht, was auch zu einer Verbesserung des Fahrkomforts führt.

Nach einem Merkmal der Erfindung ist die Krümmung des Kugelabschnittes in zwei zueinander senkrechten Richtungen unterschiedlich. Solcherart kann den stark unterschiedlichen Belastungen in Fahrzeuglängsrichtung, wie quer zur Fahrzeuglängsrichtung, optimal Rechnung getragen werden.

Nach einem anderen Merkmal der Erfindung weist das zumindest eine Stabilisierungsblech einen Rand auf, der innerhalb oder außerhalb des Gummikörpers exakt parallel zu den ebenen Montageplatten verläuft. Dies hat fertigungstechnische Vorteile und erhöht außerdem die Progressivität des Federpaketes bei Seitenbewegungen, indem die Übergangsbereiche zwischen den Kugelkalotten und den Enden der Gummielemente auf Druck beansprucht werden.

Weitere Vorteile und Merkmale der Erfindung sind den Ansprüchen, der Figurenbeschreibung und der Zeichnung zu entnehmen.

Die Erfindung ist in einem Ausführungsbeispiel dargestellt. Es zeigt:

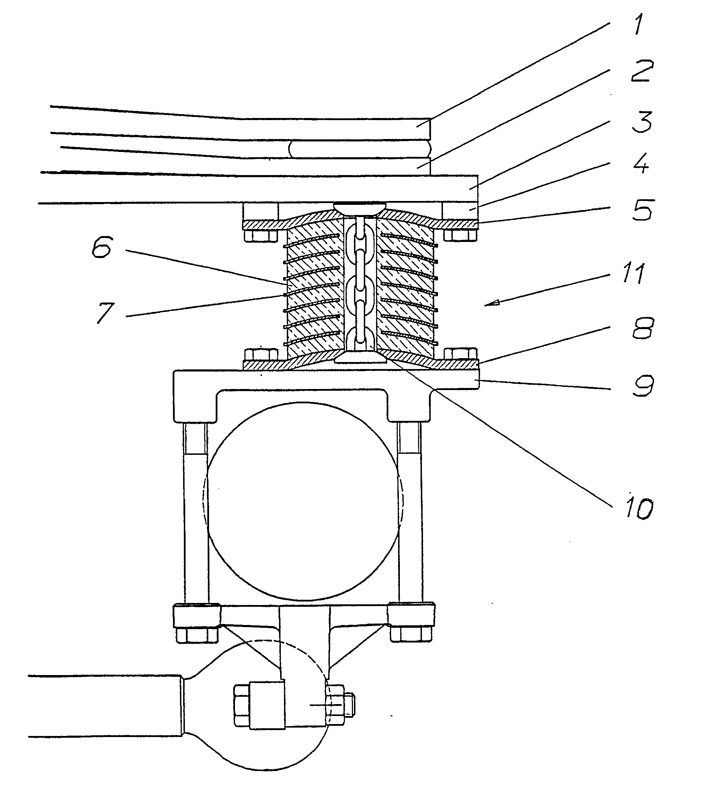

Fig. 1    Eine Doppelachse mit einem Blattfederstützlager im Schnitt

Die Figur zeigt eine Doppelachse mit einem Blattfederstützlager 11 und Federn 1, 2, 3, die über einen Zwischenring 4 mit der oberen Montageplatte 5 des Gummilagers 6 verbunden sind. Im Gummilager 6 sind in regelmäßigen Abständen Stabilisierungsbleche 7, die kugelsegmentartig ausgeformt sind, einvulkanisiert. Die untere Montageplatte 8, die ebenfalls an dem Gummilager 6 anvulkanisiert ist, ist fest, aber lösbar mit dem Federsattel 9 verbunden. Über eine Kette 10 kann die Gummifeder 6 vorgespannt werden.

Bezugszeichenliste

1 Feder
2 Feder
3 Feder
4 Zwischenring
5. Obere Montageplatte
6 Gummilager
7 Zwischenbleche
8 Untere Montageplatte
9 Federsattel
10 Kette
11 Blattfederstützlager

## Ansprüche

1. Doppelachsaggregat bei Nutzfahrzeugen mit einer anhebbaren Achse, mit folgenden Merkmalen:
   - beide Achsen sind über eine gemeinsame, pendelnd aufgehängte Blattfeder (1,2,3) abgestützt und in Längsrichtung des Fahrzeuges über Lenker geführt,
   - zwischen Federende und Achskörper sind Gummi-Metall-Elemente(6,7) angeordnet,
   - die Gummi-Metall-Elemente weisen kugelkalottenförmig oder ähnlich geformte Zwischenbleche (7) zwischen den Gummi-Lagen auf.

2. Doppelachsaggregat nach Anspruch 2, dadurch gekennzeichnet, daß die Krümmung der Kugelakalotte in zwei zueinander senkrechten Richtungen unterschiedlich ist.

3. Doppelachsaggregat nach Anspruch 1, dadurch gekennzeichnet, daß das zumindest eine Zwischenblech (7) einen Rand aufweist, der innerhalb oder außerhalb der Gummi-Lage exakt parallel zu ebenen Montageplatten (5, 8) verläuft.

## Claims

1. A double-axle unit in lorries with a raisable axle, having the following features:
   - both axles are supported by way of a common leaf spring (1, 2, 3) suspended in a swinging manner and are guided by way of guide rods in the longitudinal direction of the vehicle,
   - rubber/metal elements (6, 7) are arranged between the spring end and the body of the axle,
   - the rubber/metal elements have part-spherical or similarly shaped intermediate plates (7) between the rubber bearings.

2. A double-axle unit according to Claim 2, characterized in that the curvature of the part-spherical plate is different in two directions at right angles to each other.

3. A double-axle unit according to Claim 1, characterized in that the intermediate plate (7), of which there is at least one, has an edge extending exactly parallel to the flat assembly plates (5, 8) inside or outside the rubber bearing.

## Revendications

1. Ensemble à double essieu de véhicule utilitoire, avec un essieu relevable, ayant les caractéristiques suivantes :
   - les deux essieux sont supportés par un ressort (1,2,3) à lame commun, oscillant, suspendu, et longitudinalement sont guidés par des bras,
   - entre les extrémités du ressort et les corps des essieux, on a placé des éléments (6, 7)constitués de caoutchouc-métal,

- les éléments en caoutchouc-métal sont constitués par des tôles intermédiaires ayant la forme de calottes sphériques, ou analogue, et elles sont situées entre les couches de caoutchouc.

2. Ensemble à double essieu conforme à la revendication 1, caractérisé en ce que le cintrage de la calotte sphérique se différencie en deux directions perpendiculaires l'une à l'autre.

3. Ensemble à double essieu conforme à la revendication 2, caractérisé en ce qu'au moins une tôle intermédiaire (7) présente une partie qui soit exactement parallèle aux plaques de scellement (5, 8), à l'intérieur ou à l'extérieur des couches de caoutchouc.